# EUROPEAN PATENT APPLICATION

(11) **EP 3 162 705 A1**
(43) Date of publication of application: **03.05.2017**
(21) Application number: 16196359.0
(22) Date of filing: 28.10.2016
(51) Int. Cl.: B64C 25/58, B64C 39/02, B64C 1/00, B64C 3/00

(54) **HAND-LAUNCHED UNMANNED AERIAL VEHICLE**

(30) Priority: 30.10.2015 CN 201510729475
(71) Applicant: Ewatt Technology Co., Ltd., Wuhan Hubei 430000 (CN)
(72) Inventor: ZAHO, Guocheng, Wuhan, Hubei 430000 (CN); LUO, Wei, Wuhan, Hubei 430000 (CN)
(74) Representative: Roman, Alexis

(57) **Abstract**

The invention discloses a hand-launched unmanned aerial vehicle, and belongs to the technical field of unmanned aerial vehicles. The hand-launched unmanned aerial vehicle comprises a body, a tail, at least one power source and a lens bin, wherein the body comprises a middle section, a first side section and a second side section; two sides of the middle section are respectively detachably connected with the first side section and the second side section correspondingly; the tail is fixed to the middle section; the power source is fixed to the middle section; and the lens bin is fixed to the middle section and provided with a flexible cushion. The invention overcomes the technical defects in the prior art that the body maintenance cost of the hand-launched unmanned aerial vehicle is high and the lens bin is very likely to be damaged due to collision between the lens bin of the hand-launched unmanned aerial vehicle and the ground.

## Description

### Field of the Invention

The present invention belongs to the technical field of unmanned aerial vehicles, and particularly relates to a hand-launched unmanned aerial vehicle.

### Background of the Invention

An unmanned aircraft is referred to as an "unmanned aerial vehicle", and is controlled by radio remote control equipment and its program control device. The vehicle is not provided with a cockpit, but furnished with an autopilot, a program control device, an information acquisition device and the like. An operator on the ground or in a warship or a master vehicle remote control station performs tracking, positioning, remote control, telemetering and digital transmission on the unmanned aerial vehicle via radar and the like. The unmanned aerial vehicle can take off like a common aircraft under radio remote control or be blasted off with a booster rocket, and can also be brought by a master vehicle to fly in air.

As for a hand-launched unmanned aerial vehicle, the body of the unmanned aerial vehicle in the prior art is made of an integrally formed structure. However, as the body is designed and manufactured as a whole, the maintenance is quite inconvenient; and when a certain part of the body is damaged and cannot be repaired, the whole body of the hand-launched unmanned aerial vehicle has to be replaced, so that the maintenance cost is greatly improved. Furthermore, when the hand-launched unmanned aerial vehicle lands, zero pressure landing contact between the hand-launched unmanned aerial vehicle and the ground cannot be accurately controlled under the action of gravity or flight inertia force and the like of the hand-launched unmanned aerial vehicle, so that the lens bin is very likely to be damaged due to collision between the lens bin and the ground.

### Summary of the Invention

The present invention provides a hand-launched unmanned aerial vehicle, which overcomes or partially overcomes the technical defects in the prior art that the body maintenance cost of the hand-launched unmanned aerial vehicle is high and the lens bin is very likely to be damaged due to collision between the lens bin of the hand-launched unmanned aerial vehicle and the ground.

The present invention provides a hand-launched unmanned aerial vehicle, including a body, a tail, at least one power source and a lens bin, wherein the body includes a middle section, a first side section and a second side section; two sides of the middle section are respectively detachably connected with the first side section and the second side section correspondingly, and the middle section is located between the first side section and the second side section; the tail is fixed to the middle section; the power source is fixed to the middle section to provide power, and the middle section is located between the tail and the power source; and the lens bin is fixed to the middle section and provided with a flexible cushion, so that when the hand-launched unmanned aerial vehicle lands, the lens bin is isolated from the ground via the flexible cushion.

Optionally, the tail includes an empennage and a supporting rod; the supporting rod includes a fixed end, a detachable end and a rod body; the fixed end and the detachable end are symmetrically distributed on two sides of the rod body, the rod body is fixedly connected with the middle section via the fixed end, and the rod body is detachably connected with the empennage via the detachable end.

Optionally, the empennage includes a first trapezoidal plate and a second trapezoidal plate; one side of the first trapezoidal plate is detachably connected with the detachable end; one side of the second trapezoidal plate is detachably connected with the detachable end; and the included angle between the first trapezoidal plate and the second trapezoidal plate is an acute angle, so that the empennage formed by the first trapezoidal plate and the second trapezoidal plate has a V-shaped structure.

Optionally, the rod body is fixedly connected with the middle section by welding or integrally forming.

Optionally, the quantity of the power sources is two, and the two power sources are symmetrically fixed to two sides of the middle section, so that one power source is located at the connection part of the first side section and the middle section, and the other power source is located at the connection part of the second side section and the middle section. Optionally, the power source includes an electronic speed controller bin and a motor bin, wherein an electronic speed controller is arranged in the electronic speed controller bin, and the electronic speed controller bin is in the shape of a hollow cylinder and is fixed to the middle section; a motor is arranged in the motor bin, the motor bin is in the shape of a hollow cylinder and is fixedly connected with the electronic speed controller bin, the internal space of the motor bin is communicated with that of the electronic speed controller bin so that the motor is connected with the electronic speed controller, and the electronic speed controller controls a rotor fixed to the motor to rotate.

Optionally, the cylinder opening caliber of the electronic speed controller bin is greater than that of the motor bin, so that when the internal space of the motor bin is connected with that of the electronic speed controller bin, a ventilation area is formed in the redundant internal space of the electronic speed controller bin relative to the motor bin, and the electronic speed controller bin is cooled by cold air flowing into the ventilation area. Optionally, the electronic speed controller bin is fixedly connected with the middle section by welding or integrally forming, and/or the motor bin is fixedly connected with the electronic speed controller bin by welding or integrally forming.

Optionally, the lens bin includes a head, a tail and a bin body, wherein one end of the bin body is detachably connected with the head, and the other end thereof is detachably connected with the tail; the bin body is provided with an installation and detachment port and an installation and detachment door matched with the installation and detachment port, and the installation and detachment door is detachably connected with the installation and detachment port, so that devices are installed into or detached from the bin body via opening or closing of the installation and detachment door relative to the installation and detachment port.

Optionally, the detachable connection is bolted connection or adhesion.

### Beneficial effects:

According to the hand-launched unmanned aerial vehicle provided by the present invention, the body of the hand-launched unmanned aerial vehicle includes a middle section, a first side section and a second side section, and the three sections are detachably connected to form the body with a detachable structure, so that when the body of the hand-launched unmanned aerial vehicle is partially damaged, the damaged part can be correspondingly detached for maintenance, and the operation is simple and convenient. Moreover, when a part of the body is damaged and cannot be repaired, the part which cannot be repaired can also be correspondingly detached and replaced, thereby overcoming the technical defect that the whole body of the hand-launched unmanned aerial vehicle has to be replaced when a part of the body adopting an integrated design is damaged and cannot be repaired in the prior art, thus greatly reducing the maintenance cost. Meanwhile, the flexible cushion is further arranged at the bottom of the lens bin of the hand-launched unmanned aerial vehicle provided by the present invention, thus when the hand-launched unmanned aerial vehicle lands, the flexible cushion contacts the ground first, and the contact pressure between the lens bin and the ground is well buffered via the flexible elasticity of the flexible cushion, so that the lens bin is effectively protected and collision or damage of the lens bin due to direct contact between the lens bin and the ground is prevented.

### Brief Description of the Drawings

In order to illustrate the technical solutions in the embodiments of the present invention or in the prior art more clearly, a brief introduction will be made below to the drawings required in the embodiments. Apparently, the drawings described below are some embodiments of the present invention only, and other drawings could be obtained based on the drawings by those of ordinary skill in the art without any creative efforts.
Fig. 1 is a schematic diagram of an overall structure of a hand-launched unmanned aerial vehicle provided by an embodiment of the present invention;
Fig. 2 is a top view of Fig. 1;
Fig. 3 is a right view of Fig. 1;
Fig. 4 is a left view of Fig. 1;
Fig. 5 is a schematic diagram of another overall structure of a hand-launched unmanned aerial vehicle provided by an embodiment of the present invention;
Fig. 6 is a schematic enlarged diagram of a structure of a power source in Fig. 5;
Fig. 7 is a structural block diagram of a circuit control system of the hand-launched unmanned aerial vehicle provided by an embodiment of the present invention;
Fig. 8 is a schematic diagram of an overall structure of the hand-launched unmanned aerial vehicle after the installation and detachment door is detached in Fig. 1;
Fig. 9 is a schematic structural diagram of a convergence end in Fig. 4;

### Reference signs:

body-1, middle section-11, first side section-12, second side section-13;
tail-2, empennage-21, supporting rod-22, first trapezoidal plate-211, second trapezoidal plate-212, fixed end-221, detachable end-222, rod body-223;
power source-3, electronic speed controller bin-31, motor bin-32, electronic speed controller-33, motor 34, rotor-35, ventilation area-36;
lens bin-4, head-41, bin body-42, tail-43, installation and detachment port-421, installation and detachment door-422, connection end-431, convergence end-432;
cushion-5.

### Detailed Description of the Embodiments

A clear and complete description of the technical solutions in the embodiments of the present invention will be given below, in combination with the accompanying drawings in the embodiments of the present invention. Apparently, the embodiments described are merely a part, but not all, of the embodiments of the present invention. All of other embodiments, obtained by those of ordinary skill in the art based on the embodiments of the present invention, fall into the protection scope of the present invention. The keywords "and/or" involved in the embodiments express two conditions, i.e. "and" and "or", in other words, A and/or B involved in the embodiments of the present invention express two conditions of A and B, and A or B, and describe three states of A and B, e.g., A and/or B express: only including A but not including B, only including B but not including A, and including A and B.

Furthermore, in the embodiments of the present invention, when a component is "fixed" on another component, it can be directly on another component or a medium component can exist. When one component is "connected" to another component, it can be directly connected to another component or a medium component may exist as well. When one component is "arranged" on the other component, it can be directly arranged on the other component or a medium component may exist as well. The terms "vertical", "horizontal", "left" and "right" as well as other similar expressions used in the embodiments of the present invention are only used for the purpose of illustration rather than limiting the present invention.

In the case of a hand-launched unmanned aerial vehicle provided by the embodiment of the present invention, a body of the hand-launched unmanned aerial vehicle is divided into at least three sections, and the three sections are detachably connected to form the body with a detachable internal structure, so that when the body of the hand-launched unmanned aerial vehicle is partially damaged, the damaged part can be correspondingly detached for maintenance, and the operation is simple and convenient. Moreover, when a part of the body is damaged and cannot be repaired, the part which cannot be repaired can also be correspondingly detached and replaced, thereby overcoming the technical defect that the whole body of the hand-launched unmanned aerial vehicle has to be replaced when a part of the body adopting an integrated design is damaged and cannot be repaired in the prior art, thus greatly reducing the maintenance cost. Moreover, a flexible cushion is further arranged at the bottom of the lens bin of the hand-launched unmanned aerial vehicle provided by the embodiments of the present invention, thus when the hand-launched unmanned aerial vehicle lands, the flexible cushion contacts the ground first, and the contact pressure between the lens bin and the ground is well buffered via the flexible elasticity of the flexible cushion, so that the lens bin is effectively protected and collision or damage of the lens bin due to direct contact between the lens bin and the ground is prevented.

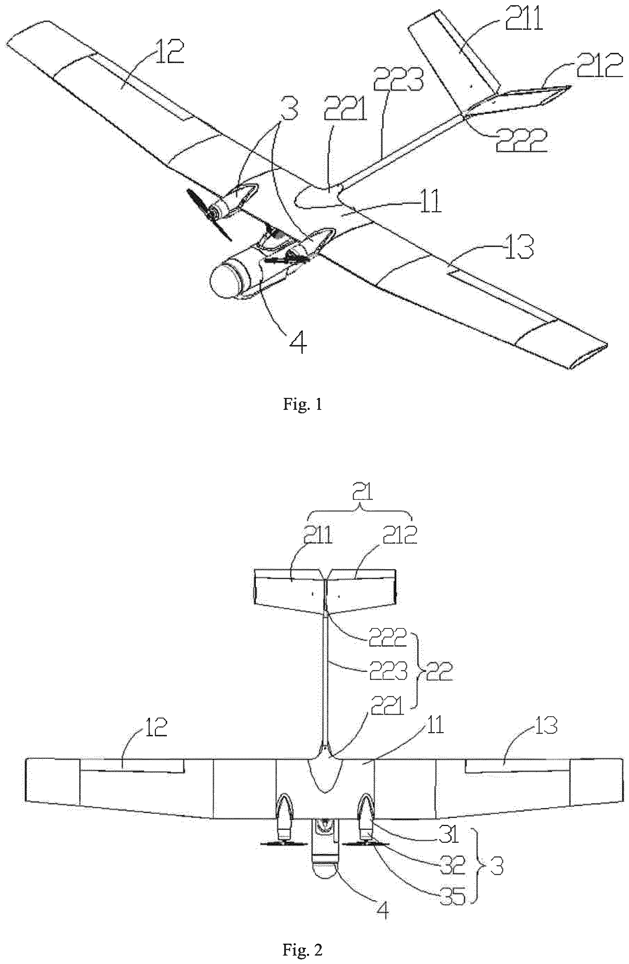

Specifically, Referring to Figs. 1 and 2, the hand-launched unmanned aerial vehicle includes a body 1, a tail 2, power sources 3, a lens bin 4 and a flexible cushion 5. The body 1, the tail 2, the power sources 3, the lens bin 4 and the flexible cushion 5 will be described one by one in detail below to support the technical problems to be solved by the present invention.

### Regarding the body 1

Also referring to Fig. 1 and Fig. 2, in order that when the body of the hand-launched unmanned aerial vehicle is partially damaged, the damaged part can be correspondingly detached for maintenance, and when a part of the body is damaged and cannot be repaired, the part which cannot be repaired can also be correspondingly detached and replaced. Preferably, the body 1 at least can include a middle section 11, a first side section 12 and a second side section 13. Two sides (which can be regarded as the left and right sides of the middle section 11 shown in Fig. 2) of the middle section 11 are respectively detachably connected with the first side section and the second side section correspondingly, and the middle section is located between the first side section and the second side section. That is, the left side of the middle section 11 is detachably connected with the first side section 12, and the right side of the middle section 11 is detachably connected with the second side section 13. In this case, the middle section 11, the first side section 12 and the second side section 13 can be randomly detached, so that the body has the characteristic that the maintenance and the operation are simple and convenient.

### Regarding the tail 2

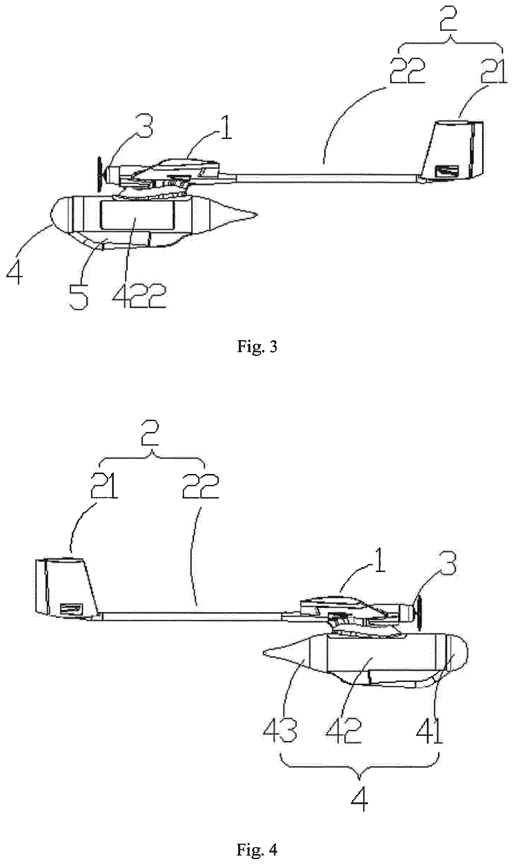

Referring to Figs. 1-2, in conjunction with Figs. 3-4, in order to ensure the stability of the whole hand-launched unmanned aerial vehicle during flying so that the gravity center of the body 1 is stable, the tail 2 is fixed at the middle part of the middle section 11 in the embodiment of the present invention, e.g., at the rear middle part of the middle section 11 as shown in Fig. 2.

Further, the tail 2 at least includes an empennage 21 and a supporting rod 22. The empennage 21 includes a first trapezoidal plate 211 and a second trapezoidal plate 212. The supporting rod 22 includes a fixed end 221, a detachable end 222 and a rod body 223. Specifically, as shown in Fig. 1 or 2, the fixed end 221 and the detachable end 222 can be regarded as two opposite ends of the rod body 223. That is, the fixed end 221 is one end of the rod body 223 close to the body 1, so that the rod body 223 is fixedly connected with the middle section 11 via the fixed end 221; the detachable end 222 is the other end of the rod body 223 close to the tail 2, so that the rod body 223 is detachably connected with the tail 2 via the detachable end 222. Of course, in the embodiment of the present invention, the empennage 21 includes a first trapezoidal plate 211 and a second trapezoidal plate 212, wherein one side of the first trapezoidal plate 211 is detachably connected with one side (which can be regarded as the left side of the detachable end 222 as shown in Fig. 2) of the detachable end 222, and one side of the second trapezoidal plate 212 is detachably connected with the other side (which can be regarded as the right side of the detachable end 222 as shown in Fig. 2) of the detachable end 222. The first trapezoidal plate 211, the second trapezoidal plate 212 and the detachable end 222 can be detached by way of detachable connection, so that the tail 2 can be assembled and maintained simply and conveniently.

It is worth mentioning that in the embodiment of the present invention, the included angle between the first trapezoidal plate 211 and the second trapezoidal plate 212 is an acute angle, so that the empennage formed by the first trapezoidal plate 211 and the second trapezoidal plate 212 has a V-shaped structure. The tail in the prior art is in the design form of an inverse T tail or a T tail. However, the control surface of the horizontal empennage is apt to be disturbed by airflow flowing through main wings in the inverse T tail structure (the supporting rod and the horizontal empennage are on the same plane), and furthermore, the design structure of the T tail has higher requirement for the strength of the structural material for the tail of the body, that is, weight has to be increased at the tail, and the horizontal empennage with the structure of T tail design is apt to stall or lose the control surface effect due to turbulent airflow flowing through the main wings when the hand-launched unmanned aerial vehicle turns at a low speed. The V-shaped empennage 21 formed by the first trapezoidal plate 211 and the second trapezoidal plate 212 and having a V-shaped structure, provided in the embodiment of the present invention, is simple in structure and light in weight and has higher efficiency relative to the traditional inverse T tail and T tail, and the empennage 21 with the V tail structure has low resistance and is not prone to damage during landing, so the empennage is particularly suitable for an unmanned aerial vehicle (e.g., a hand-launched unmanned aerial vehicle) with small turning requirement, and the turning energy management is more advantageous.

Of course, in order to reasonably determine the degrees of the included angle between the first trapezoidal plate 211 and the second trapezoidal plate 212 and adaptively adjust the magnitude of the included angle between the first trapezoidal plate 211 and the second trapezoidal plate 212 more flexibly in actual operation, the connection between the first trapezoidal plate 211 and the detachable end 222 and between the second trapezoidal plate 212 and the detachable end 222 can be movable connection. That is, the first trapezoidal plate 211 and the second trapezoidal plate 212 can rotate relative to the rod body 223 through movable connection, and then the magnitude of the included angle between the first trapezoidal plate 211 and the second trapezoidal plate 212 is adjusted. The movable connection between the first trapezoidal plate 211 and the detachable end 222 and the movable connection between the second trapezoidal plate 212 and the detachable end 222 can be in other connection mode such as pin connection, hinge connection or bearing connection.

### Regarding the power sources 3

In the embodiment of the present invention, the power sources 3 are fixed to the middle section 11, as shown in Fig. 1 or 2, to provide power for the flight of the hand-launched unmanned aerial vehicle. Of course, in order to reduce the boosting thrust in the take-off process of the hand-launched unmanned aerial vehicle, shorten the take-off time of the hand-launched unmanned aerial vehicle and improve the flight speed of the hand-launched unmanned aerial vehicle during flying, the hand-launched unmanned aerial vehicle provided by the embodiment of the present invention can have two power sources 3, and the two power sources 3 are symmetrically distributed on the left and right sides of the middle section 11. It needs be noted that the two power sources 3 provide power for the flight of the hand-launched unmanned aerial vehicle, and can be arranged at other part of the body 1, e.g., the first side section 12 or the second side section 13. However, the hand-launched unmanned aerial vehicle needs to bear pressure in multiple direction during flying, e.g., self gravity, wind resistance, airflow pressure, etc., but its pressure bearing capacity is limited. When the power sources 3 are fixed to the first side section 12 or the second side section 13, the pressure borne by the first side section 12 or the second side section 13 in the body 1 is very likely to be increased, so that the flight stability of the whole vehicle is influenced, and even an accident that the first side section 12 or the second side section 13 is broken may occur. Thus, in the embodiment of the present invention, the two power sources 3 are symmetrically distributed on the left and right sides of the middle section 11, thereby effectively improving the flight stability of the whole vehicle, and also preventing the accident that the first side section 12 or the second side section 13 is broken due to high pressure applied thereto.

Of course, those skilled in the art obviously can understand that designing two power sources 3 and symmetrically distributing the two power sources 3 on the left and right sides of the middle section 11 is merely an implementation method of the embodiment of the present invention without limitation. In the actual operation process, the technical solution that the quantity of the power sources 3 is increased or reduced and the remaining power sources 3 after the increase or reduction are uniformly distributed on the middle section 11 is also applicable to the present invention.

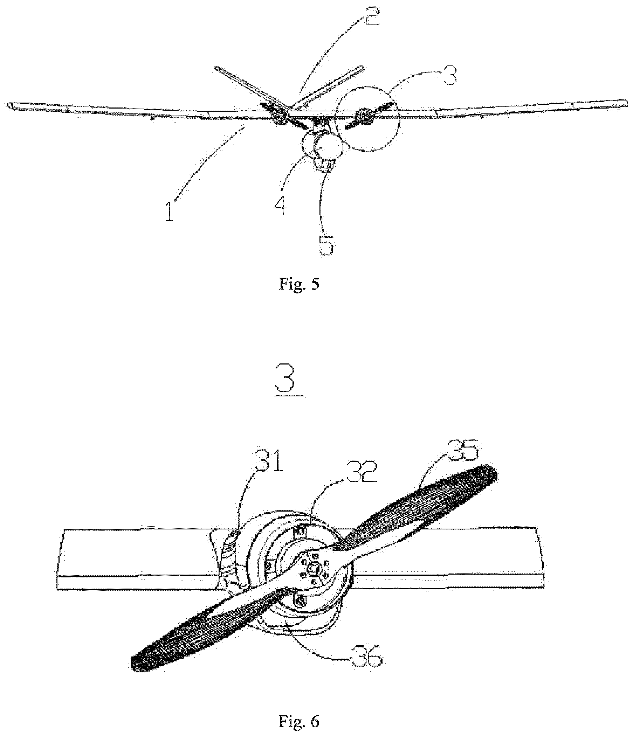

Further, in conjunction with Fig. 2, with reference to Figs. 5, 6 and 7, the power source 3 at least can include an electronic speed controller bin 31 and a motor bin 32. An electronic speed controller 33 is arranged in the electronic speed controller bin 31, and the electronic speed controller bin is in the shape of a hollow cylinder and is fixed to the middle section 11. A motor 34 is arranged in the motor bin 32, and the motor bin 32 is matched with the electronic speed controller bin 31 in shape, is also in the shape of a hollow cylinder and is fixedly connected with the electronic speed controller bin 31. It needs be noted that the internal space of the motor bin 32 is communicated with that of the electronic speed controller bin 31, so that the motor 34 is connected with the electronic speed controller 33. The internal space of the motor bin 32 being communicated with that of the electronic speed controller bin 31 can be understood as the end of the motor bin 32 being connected with the end of the electronic speed controller bin 31 in an end-to-end mode, as shown in Fig. 2, so that the motor bin 32 and the electronic speed controller bin 31 form an overall hollow cylinder. It is most critical that, in the embodiment of the present invention, the cylinder opening caliber of the electronic speed controller bin 31 is greater than that of the motor bin 32, so that when the internal space of the motor bin 32 is connected with that of the electronic speed controller bin 31, a ventilation area 36 is formed in the redundant internal space of the electronic speed controller bin 31 relative to the motor bin 32. As shown in Fig. 6, the ventilation area 36 includes an air inlet facing the head and an air outlet facing the tail 2. In this case, during flying of the hand-launched unmanned aerial vehicle, external airflow enters via the air inlet of the ventilation area 36, flows through the internal space of the electronic speed controller bin 31 and then flows out of the air outlet, thereby cooling the internal space (including the electronic speed controller 33) of the electronic speed controller bin via cold air flowing into the ventilation area 36, and effectively preventing the technical defect that the electronic speed controller 33 is eventually burnt out due to over high temperature of the internal space of the electronic speed controller bin 31 in the case where the electronic speed controller 33 in the electronic speed controller bin 31 works under power for a long time and continuously emits heat during flying of the hand-launched unmanned aerial vehicle.

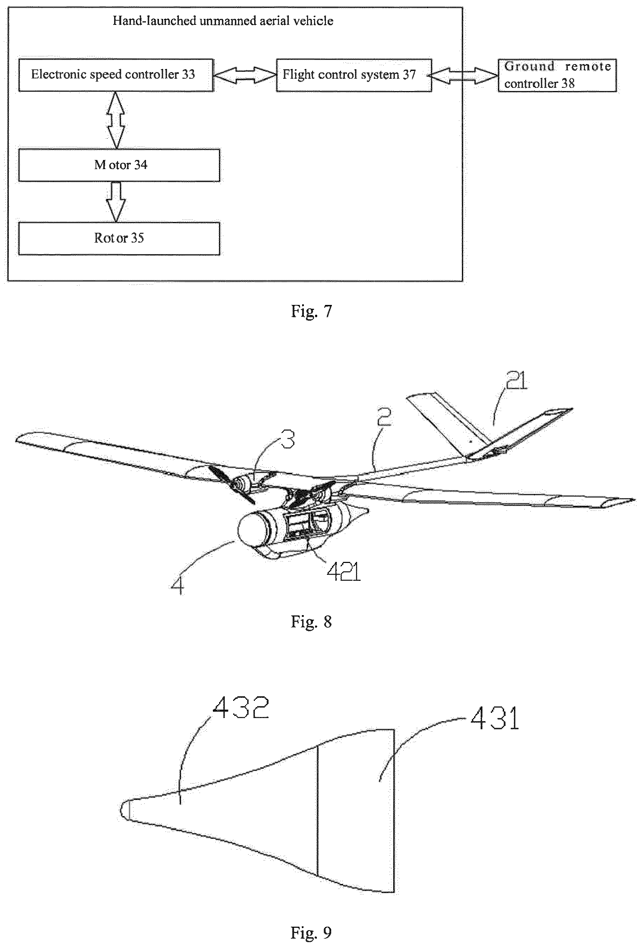

Further, the circuit control system inside the hand-launched unmanned aerial vehicle is shown in Fig. 7. The electronic speed controller 33 is further connected with a flight control system 37 inside the body 1, the flight control system 37 transmits a signal to a ground remote controller 38 on the ground, the ground remote controller 38 sends a control instruction to the flight control system 37, the flight control system 37 controls the electronic speed controller 33 to drive the motor 34 to rotate, and a rotor 35 fixed to the motor 34 is finally controlled to rotate. Thus, flight operation of the hand-launched unmanned aerial vehicle is realized.

It needs be specially noted that in the embodiment of the present invention, in order to ensure normal operation of the motor 34 and the rotor 35 and prevent the technical defect that the motor 34 cannot drive the rotor 35 to rotate due to the failure of the electronic speed controller 33, the quantity of the electronic speed controller 33 can be preferably plural, e.g., 2, 3 or 4. In addition, all the electronic speed controllers 33 are connected to the motor 34 via an automatic transfer switch. Normally, the motor 34 is connected to one electronic speed controller 33 via the automatic transfer switch, and then the electronic speed controller 33 connected with the motor 34 controls the motor 34 to operate normally. Abnormally, when the electronic speed controller 33 connected with the motor 34 fails, the motor 34 is connected to the next normal electronic speed controller 33 via the automatic transfer switch. Thus, normal operation of the motor 34 and the rotor 35 is ensured. Compared with the traditional hand-launched unmanned aerial vehicle, the hand-launched unmanned aerial vehicle provided by the embodiment of the present invention has the characteristics of high safety performance and long flight time.

Similar to the working principle of multiple electronic speed controllers 33 and one motor 34, the flight control system 37 can also be plural, e.g., 2, 3 or 4 in the embodiment of the present invention. All the flight control systems 37 are also connected to one electronic speed controller 33 via an automatic transfer switch. Normally, the electronic speed controller 33 is connected with one flight control system via the automatic transfer switch, and then the flight control system connected therewith controls the electronic speed controller 33 to operate normally. Abnormally, when the flight control system 37 connected to the electronic speed controller 33 fails, the electronic speed controller 33 is connected to the next normal flight control system 37 via the automatic transfer switch. Thus, normal operation of the electronic speed controller 33 and the flight control system 37 is ensured. Of course, those skilled in the art obviously can understand, in the embodiment of the present invention, the above two connection modes can be combined, that is, multiple electronic speed controllers 33 are connected to the motor 34 via one automatic transfer switch, and each electronic speed controller 33 is also connected to multiple flight control systems 37 via one automatic transfer switch at the same time, thereby further improving the safety performance of the hand-launched unmanned aerial vehicle. The switching principle of the automatic transfer switch between the electronic speed controller 33 and the motor 34 and the switching principle of the automatic transfer switch between the flight control system 37 and the electronic speed controller 33 are the prior art, and thus are not redundantly described herein.

### Regarding the lens bin 4

Referring to Figs. 3, 4 and 8, the lens bin 4 is fixed to the bottom of the middle section 11. The lens bin 4 at least can include a head 41, a bin body 42 and a tail 43. One end of the bin body 42 is detachably connected with the head 41, the bin body 42 is provided with an installation and detachment port 421 and an installation and detachment door 422 matched with the installation and detachment port 421, and the installation and detachment door 422 is detachably connected with the installation and detachment port 421, so that devices are installed into or detached from the bin body 42 via opening or closing of the installation and detachment door 422 relative to the installation and detachment port 421. Furthermore, the tail 43 includes a connection end 431 and a convergence end 432, as shown in Fig. 9. The tail 43 is detachably connected with the other end of the bin body 42 via the connection end 431, and the caliber of the connection end 431 is greater than that of the convergence end 432, so that the caliber of the tail 43 is gradually reduced from the connection end 431 to the convergence end 432.

The head 41, the bin body 42 and the tail 43 are detachably connected in the lens bin 4, so that when the lens bin 4 is partially damaged, the damaged part can be correspondingly detached for maintenance, and the operation is simple and convenient. Moreover, when a part of the lens bin 4 is damaged and cannot be repaired, the part which cannot be repaired can also be correspondingly detached and replaced, thereby overcoming the technical defect that the whole lens bin 4 has to be replaced when a part of the lens bin 4 adopting an integrated design is damaged and cannot be repaired, thus greatly reducing the maintenance cost. Moreover, by adopting such a loading manner that the installation and detachment port 421 is matched with the installation and detachment door 422, when devices are to be installed into or detached from the lens bin 4, it only needs to open the installation and detachment door 422. Therefore, the operation process is shortened, and the operating efficiency is improved.

On the other hand, a flexible cushion 5 is also arranged at the bottom of the lens bin 4, and the flexible cushion 5 can be a rubber cushion with elastic function or an air cushion filled with compressed air, so that when the hand-launched unmanned aerial vehicle lands, the flexible cushion 5 contacts the ground first, and the contact pressure between the lens bin 4 and the ground is well buffered via the flexible elasticity of the flexible cushion 5, so that the lens bin is effectively protected and collision or damage of the lens bin due to direct contact between the lens bin and the ground is prevented.

Finally, it needs be noted that, in the hand-launched unmanned aerial vehicle provided by the embodiment of the present invention, the fixed connection between the rod body 223 and the middle section 11, the fixed connection between the electronic speed controller bin 31 and the middle section 11 and the fixed connection between the motor bin 32 and the electronic speed controller bin 31 can be realized by welding or integrally forming. All the detachable connection can be bolted connection or adhesion.

Although the preferred embodiments of the present invention have been described, other changes and modifications could be made to these embodiments by those skilled in the art once they get the basic creative concepts. Accordingly, the appended claims are intended to be interpreted as covering the preferred embodiments and all the changes and modifications falling within the scope of the present invention.

Obviously, various modifications and variations could be made to the present invention by those skilled in the art without departing from the spirit and scope of the present invention. Thus, provided that these modifications and variations made to the present invention are within the scope of the claims of the present invention and equivalent technologies thereof, the present invention is also intended to cover these modifications and variations.

## Claims

1. A hand-launched unmanned aerial vehicle, comprising:
a body (1), comprising:
a middle section (11),
a first side section (12), and
a second side section (13), wherein two sides of the middle section (11) are respectively detachably connected with the first side section (12) and the second side section (13) correspondingly, and the middle section (11) is located between the first side section (12) and the second side section (13);
a tail (2), fixed to the middle section (11);
at least one power source (3), wherein the power source (3) is fixed to the middle section (11) to provide power, and the middle section (11) is located between the tail (2) and the power source (3); and
a lens bin (4), wherein the lens bin (4) is fixed to the middle section (11) and provided with a flexible cushion, so that when the hand-launched unmanned aerial vehicle lands, the lens bin (4) is isolated from the ground via the flexible cushion.

2. The hand-launched unmanned aerial vehicle of claim 1, wherein the tail (2) comprises:
an empennage (21); and
a supporting rod (22), comprising:
a fixed end (221),
a detachable end (222), and
a rod body (223), wherein the fixed end (221) and the detachable end (222) are symmetrically distributed on two sides of the rod body (223), the rod body (223) is fixedly connected with the middle section (11) via the fixed end (221), and the rod body (223) is detachably connected with the empennage (21) via the detachable end (222).

3. The hand-launched unmanned aerial vehicle of claim 2, wherein the empennage (21) comprises:
a first trapezoidal plate (211), wherein one side of the first trapezoidal plate (211) is detachably connected with the detachable end (222); and
a second trapezoidal plate (212), wherein one side of the second trapezoidal plate (212) is detachably connected with the detachable end (222);
wherein the included angle between the first trapezoidal plate (211) and the second trapezoidal plate (212) is an acute angle, so that the empennage (21) formed by the first trapezoidal plate (211) and the second trapezoidal plate (212) has a V-shaped structure.

4. The hand-launched unmanned aerial vehicle of claim 2 or 3, wherein
the rod body (223) is fixedly connected with the middle section (11) by welding or integrally forming.

5. The hand-launched unmanned aerial vehicle of claim 1, wherein
the quantity of the power sources (3) is two, and the two power sources (3) are symmetrically fixed to two sides of the middle section (11), so that one power source is located at the connection part of the first side section (12) and the middle section (11), and the other power source is located at the connection part of the second side section (13) and the middle section (11).

6. The hand-launched unmanned aerial vehicle of claim 5, wherein the power source comprises:
an electronic speed controller bin (31), wherein an electronic speed controller (33) is arranged in the electronic speed controller bin (31), and the electronic speed controller bin (31) is in the shape of a hollow cylinder and is fixed to the middle section (11); and
a motor bin (32), wherein a motor (34) is arranged in the motor bin (32), the motor bin (32) is in the shape of a hollow cylinder and is fixedly connected with the electronic speed controller bin (31), the internal space of the motor bin (32) is communicated with that of the electronic speed controller bin (31) so that the motor (34) is connected with the electronic speed controller (33), and the electronic speed controller (33) controls a rotor (35) fixed to the motor (34) to rotate.

7. The hand-launched unmanned aerial vehicle of claim 6, wherein
the cylinder opening caliber of the electronic speed controller bin (31) is greater than that of the motor bin (32), so that when the internal space of the motor bin (32) is connected with that of the electronic speed controller bin (31), a ventilation area (36) is formed in the redundant internal space of the electronic speed controller bin (31) relative to the motor bin (32), and the electronic speed controller bin (31) is cooled by cold air flowing into the ventilation area (36).

8. The hand-launched unmanned aerial vehicle of claim 6 or 7, wherein
the electronic speed controller bin (31) is fixedly connected with the middle section (11) by welding or integrally forming;
and/or
the motor bin (32) is fixedly connected with the electronic speed controller bin (31) by welding or integrally forming.

9. The hand-launched unmanned aerial vehicle of claim 1, wherein the lens bin (4) comprises:
a head (41);
a tail (43); and
a bin body (42), wherein one end of the bin body (42) is detachably connected with the head (41), and the other end thereof is detachably connected with the tail (43); the bin body (42) is provided with an installation and detachment port (421) and an installation and detachment door (422) matched with the installation and detachment port (421), and the installation and detachment door (422) is detachably connected with the installation and detachment port (421), so that devices are installed into or detached from the bin body (42) via opening or closing of the installation and detachment door (422) relative to the installation and detachment port (421).

10. The hand-launched unmanned aerial vehicle of claim 1 or 2 or 3 or 5 or 6 or 7 or 9, wherein
the detachable connection is bolted connection or adhesion.
